Europäisches Patentamt

European Patent Office

Office européen des brevets

(11) Numéro de publication: **0 153 249**
**A2**

# DEMANDE DE BREVET EUROPEEN

(21) Numéro de dépôt: 85400277.1

(22) Date de dépôt: 15.02.85

(51) Int. Cl.⁴: **G 02 B 6/38**

(30) Priorité: 17.02.84 FR 8402434

(43) Date de publication de la demande: 28.08.85
Bulletin 85/35

(84) Etats contractants désignés: **DE GB IT**

(71) Demandeur: SOCAPEX, 10 bis, quai Léon Blum,
F-92153 Suresnes (FR)

(72) Inventeur: Soster, Marie-Claude, THOMSON-CSF SCPI
-173, bld Haussmann, F-75379 Paris-Cedex 08 (FR)
Inventeur: Lecomte, Jöel, THOMSON-CSF SCPI -173, bld
Haussmann, F-75379 Paris-Cedex 08 (FR)

(74) Mandataire: Ruellan-Lemonnier, Brigitte et al,
THOMSON-CSF SCPI 173, boulevard Haussmann,
F-75379 Paris Cedex 08 (FR)

(54) Embout de centrage pour fibre optique et fiche comportant un tel embout.

(57) L'invention concerne un embout de centrage pour fibre optique et une fiche comportant un tel embout.

L'embout selon l'invention permet le démontage de la fibre optique et comporte un V 1' de centrage de l'embout 1 dans un corps de connecteur 100, une rainure longitudinale 116 en forme de V ménagée à la partie supérieure de l'avant de l'embout 1 et centrée par rapport au V 1', ainsi qu'une patte 4 destinée à appliquer la fibre optique dans la rainure en forme de V 116. La fibre 20 comporte une couronne fendue 90 portant des griffes 96, 97 dont la partie avant 99 vient s'insérer dans une rainure 101 du raccord dans laquelle la fiche est montée.

## EMBOUT DE CENTRAGE POUR FIBRE OPTIQUE ET FICHE
## COMPORTANT UN TEL EMBOUT

La présente invention a pour objet un embout de centrage pour fibres optiques qui autorise le démontage de celle-ci ainsi qu'une fiche comprenant un tel embout.

On connait de l'art antérieur différents types d'embouts de centrage pour fibres optiques dans lesquelles la fibre est centrée puis immobilisée par collage. Ces embouts conviennent aux applications pour lesquelles le montage de la fibre est définitif, mais, si on souhaite simplement opérer un raccordement temporaire d'une fibre optique à un appareil de mesure, il faut pouvoir disposer d'un embout de centrage dans lequel la fibre peut être montée avec un centrage satisfaisant, puis ultérieurement démontée.

La présente invention a ainsi pour objet un embout de centrage pour fibres optiques permettant le démontage de celles-ci caractérisé en ce qu'il comporte :

- un V de centrage de l'embout dans un corps de connecteur ;

- une rainure longitudinale en forme de V, ménagée à la partie supérieure de l'avant de l'embout, et centrée par rapport audit V ;

- une patte portant un patin souple et destinée à venir appliquer la fibre optique dans ladite rainure en forme de V ;

- des moyens de détrompage permettant le montage de l'embout sur le corps de connecteur selon une orientation donnée.

Selon une variante, l'embout comporte une première collerette destinée à former une butée pour l'embout lors du montage flottant de celui-ci dans le raccord de connecteur, ainsi que d'appui à la poussée d'un ressort de mise en butée de l'embout.

La patte portant un patin souple peut être logée dans une rainure longitudinale ménagée à la partie avant de l'embout.

L'embout peut comporter un alésage longitudinal, recevant un tube dont le diamètre inférieur est, sur une partie au moins de sa longueur, égal au jeu près au diamètre de la fibre optique, de manière à pré-aligner celle-ci avec ladite rainure longitudinale en forme de V.

Selon un mode de réalisation préféré, l'embout comporte une saignée longitudinale débouchant à la face avant de l'embout qu niveau de la patte portant un patin souple. La patte a deux positions. Suivant la position 1, la patte est avancée ; cette position permet l'introduction de la fibre. Suivant la position 2, la patte est reculée ; cette position permet la mise en position de la fibre.

L'invention concerne également une fiche comportant un embout tel que défini ci-dessus et qui est destiné à être encliqueté dans un raccord à l'aide de griffes, de manière à obtenir un montage et un démontage plus rapide sur le raccord que dans le cas d'un vissage. A cet effet, la fiche est caractérisée en ce que le corps de fiche comporte une deuxième collerette servant à sa mise en butée sur un raccord ainsi qu'une couronne fendue comprenant des griffes venant s'insérer dans une rainure du raccord et venant s'appuyer sur ladite deuxième collerette en vue de sa mise en butée, l'encliquetage des griffes dans la rainure étant réalisé par déplacement longitudinal d'une bague présentant à sa partie avant un profil incurvé de telle manière que, lorsque la bague est déplacé en direction de l'extrémité des griffes, le profil incurvé vienne en contact avec une partie dorsale arrondie de celle-ci de manière à les pousser progressivement au fond de la rainure du raccord.

L'embout est avantageusement de type flottant. Une rondelle élastique vient pousser la couronne fendue en direction de la deuxième collerette du corps de fiche, et l'extrémité des griffes tourné vers la rainure du raccord est arrondie de telle sorte qu'un rattrapage de jeu soit possible par le fait que ladite extrémité arrondie des griffes provoque un recul éventuel de la couronne fendue d'une quantité correspondant au jeu à rattraper.

Selon une variante, la fibre optique est bloquée à la partie arrière de la fiche par une bague fendue présentant un profil tronconique coopérant en vue du serrage avec un tronc de cône correspondante d'un écrou de serrage.

Le déplacement vers l'arrière de la couronne fendue et de la bague peut être limité par la partie avant d'un bouchon vissé à l'arrière du corps de fiche, ladite partie avant servant également d'appui à ladite rondelle élastique.

L'invention sera mieux comprise à la lecture de la description qui va suivre, donnée à titre d'exemple non limitatif, en liaison avec les figures qui représentent :

- la figure 1a, en coupe longitudinale, un embout de centrage du type flottant selon l'invention monté dans un corps de fiche suivant l'invention ;

- la figure 1b, en coupe horizontale, la partie avant de l'embout suivant l'invention ;

- les figures 2a et 2b, respectivement en coupe verticale et en vue de dessus, le corps de l'embout suivant l'invention ;

- la figure 2c, la vue suivant F de la figure 2a ;

- les figures 3a et 3b, respectivement une vue d'avant et une vus d'arrière du corps de fiche suivant l'invention ;

- les figures 4a et 4b, respectivement en coupe verticale et en vue latérale, une couronne selon l'invention ;

- les figures 5a à 5c, respectivement en coupe verticale partielle, en vue de bout et en vue de dessus, une bague fendue selon l'invention ;

- les figures 6a à 6c, respectivement en coupe longitudinale, en vue de dessus et en coupe transversale, une patte à deux positions selon une variante de l'invention, représentée dans sa deuxième position, et la figure 6d, ladite patte en coupe verticale dans sa première position ;

- la figure 7, une autre variante de patte à deux positions.

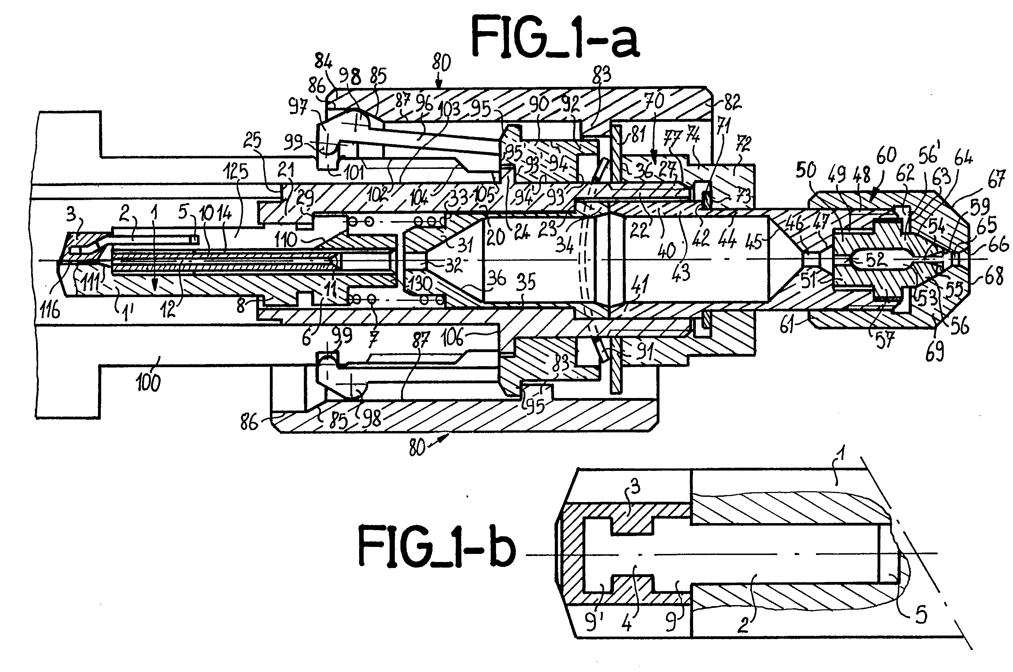

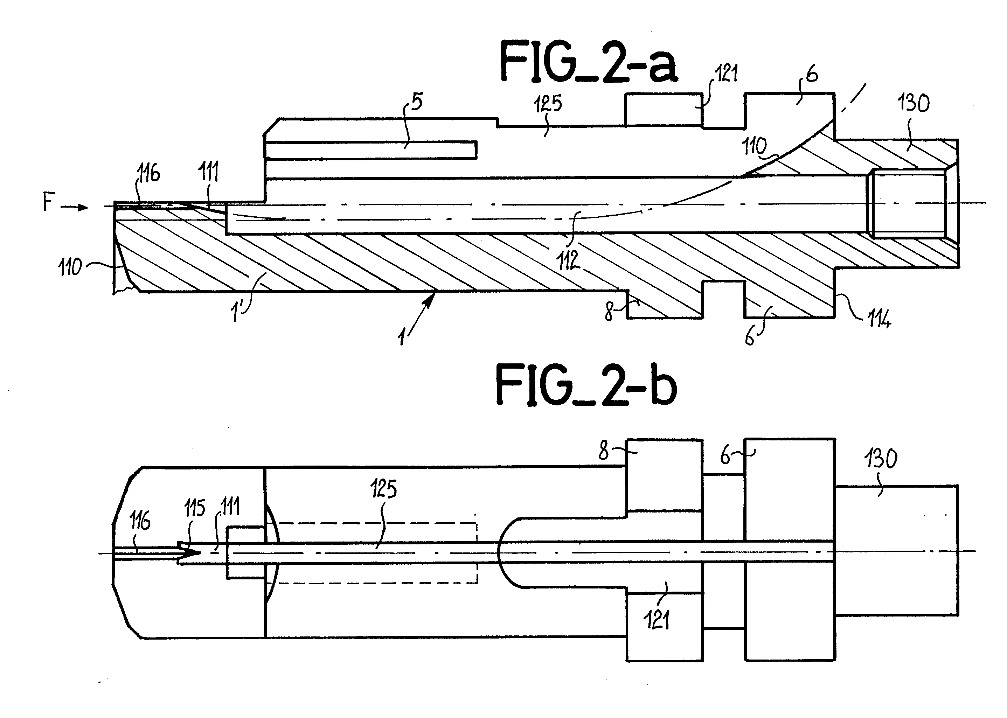

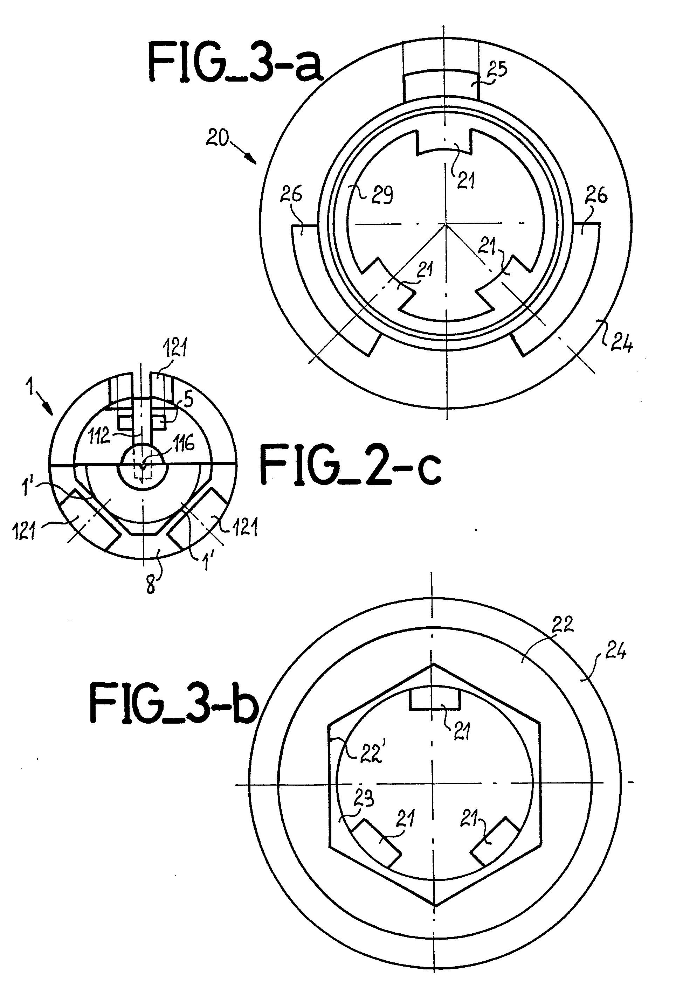

Selon les figures 1a, 1b, 2a et 2b, l'embout selon l'invention comporte un corps d'embout désigné par le repère général 1 et présentant à la partie inférieure un profil en forme de V 1' destiné à son alignement dans un manchon. Il existe dans l'art antérieur différents types connus un manchon convenant soit à des embouts fixes, soit à des embouts flottants. Le mode de réalisation décrit correspond au cas d'un embout flottant, mais on comprendra que l'invention s'applique également au cas d'un embout non flottant. Dans le cas donc d'un embout flottant, le manchon peut être du type de celle décrite dans la demande de brevet français N° 82.10906 déposée le 22 juin 1982 par la Demanderesse et intitulée "FICHE POUR CONNECTEUR DE FIBRE OPTIQUE ET CONNECTEUR LA COMPORTANT".

Sensiblement au niveau de son axe longitudinal, le corps d'embout présente un alésage 112 destiné à recevoir un tube 10 percé d'un alésage 12 destiné à pré-centrer la fibre, celle-ci pouvant être introduite facilement grâce à un chanfrein d'entrée 11, le tube 10 étant entouré d'un deuxième tube 14 dont lediamètre extérieur correspond au diamètre intérieur de l'alésage 112 au jeu près. Le tube 14 dépasse du tube 10 vers l'arrière.

A l'avant de l'embout et coaxial avec l'alésage 112, est ménagée une rainure 116 en forme de V destiner à recevoir la fibre optique, celle-ci étant mise en position par une patte 2 présentant une portion avant 4 autour de laquelle est surmoulé un patin souple 3 dont la partie inférieure vient appuyer la fibre optique dans la rainure 116. La partie avant 4 présente deux sections plus larges 9 et 9' permettant le maintien du patin souple surmoulé 3.

En vue de son montage dans un corps de fiche 20, l'embout 1 présente à sa partie arrière des rainures de détrompage 121 (voir figure 2c) et coopérant avec des nervures 21 du corps de fiche 20 (voir figure 3a).

D'autre part, l'embout 1 présente à sa partie arrière et derrière les rainures 121 une collerette 6 venant en appui sur un rebord cylindrique 29 du corps de fiche 20 ainsi que sur les nervures 21. L'embout est poussé par un ressort 7 qui vient s'appuyer vers l'avant de la collerette 6 de l'embout et vers l'arrière vient en butée sur un contour cylindrique 33. Le ressort 7 est pré-guidé par une partie cylindrique avant 31 d'un limiteur 30 et par une partie cylindrique arrière du corps d'embout 1. La venue en butée de la partie cylindrique arrière 130 sur la partie cylindrique 31 détermine le recul maximum de l'embout flottant dans le corps d'embout 20. La partie cylindrique avant 31 du limiteur 30 présente un alésage 32 permettant le passage de la fibre, celui-ci s'épanouissant vers l'arrière jusqu'à une partie cylindrique 35 par l'intermédiaire d'une région tronconique 36. Le limiteur 30 est mis en butée dans le corps de fiche grâce à une collerette 34 coopérant avec un décrochement 23 du corps de fiche.

Le limiteur 30 et une ferrule 40 sont bloqués par un bouchon 70, le blocage s'effectuant par l'intermédiaire d'une rondelle 71 portant sur un décrochement 42 de la ferrule 40, la partie avant 41 de la ferrule 40 venant porter sur la partie arrière 34 du limiteur 30. Le bouchon 70 vient se visser au niveau de sa partie cylindrique avant 75 sur la partie cylindrique arrière 22 du corps de fiche. La partie cylindrique avant 75 du bouchon 70 vient porter par son extrémité 76 sur une rondelle 81 servant de butée à une rondelle élastique 91 ainsi qu'à une bague 80 dont la fonction va être explicitée ci-dessous.

Une couronne fendue 90 coulisse à l'extérieur du corps de fiche 20 par à un alésage 94' et son déplacement et limité vers l'avant par une collerette 24 du corps de fiche 20 coopérant avec un décrochement 93' de la couronne fendue 90. La couronne fendue 90 est poussée en butée par la rondelle élastique 91 qui vient porter sur un décrochement 93 de la couronne fendue 90. La couronne fendue 90 comporte une partie cylindrique arrière de diamètre supérieur à celui de la rondelle élastique 91 et qui vient limiter le déplacement de la couronne fendue 90 lorsqu'elle vient en butée sur la rondelle 81.

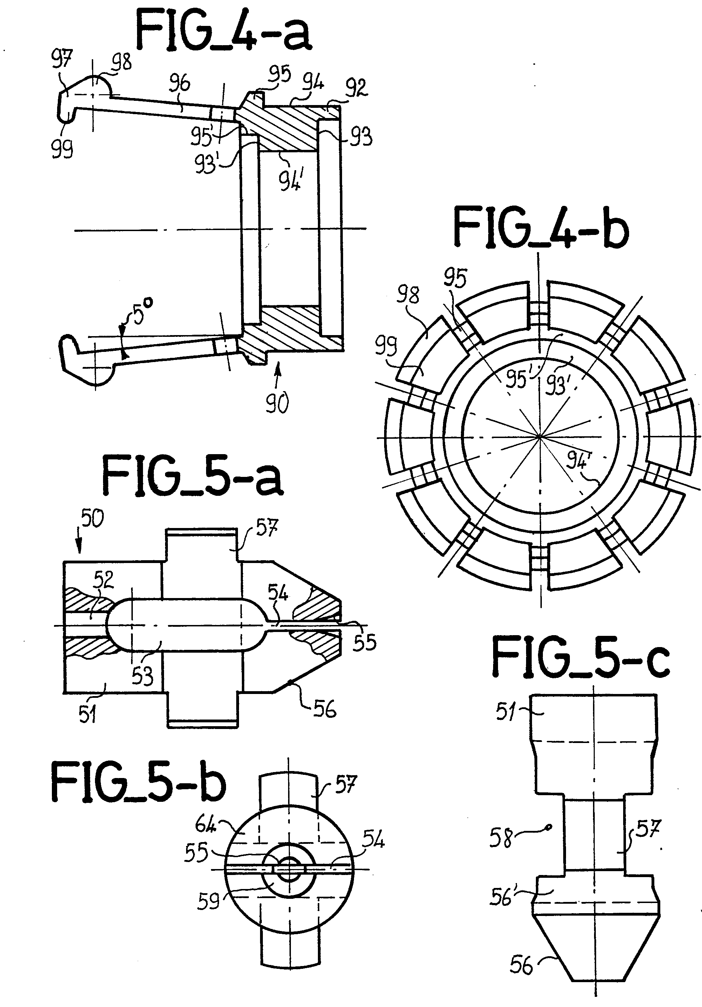

La couronne fendue 90 (voir également figure 4a et 4b) porte à sa partie avant une pluralité de griffes 96 légèrement ouvertes vers l'extérieur, sur le dessin d'un angle de 5°, et dont la partie avant 97 comporte vers l'intérieur des parties d'accrochage arrondies 99 et vers l'extérieur des parties dorsales également arrondies 98. Une bague 80 entoure la couronne fendue 90 et peut être déplacée par la main de l'opérateur entre une position arrière déterminée par mise en butée d'une collerette 83 de la bague 80 et une position avant définie par mise en butée de la collerette interne 83 sur une collerette externe 95 de la couronne fendue 90. L'alésage intérieur 87 de la bague 80 se prolonge vers l'avant par un secteur tronconique 85 s'évasant jusqu'à un alésage 86 dont le diamètre correspond au jeu près à l'encombrement des griffes en position ouverte.

Lorsque la fiche est montée sur le raccord, la partie avant 97 des griffes 96 se trouve située pratiquement au niveau d'une rainure 101 ménagée sur le pourtour du raccord 100. A la partie supérieure de la figure 1a, on a montré la fiche en position déverrouillée, celle-ci correspondant à la mise en butée arrière de la bague 81, la partie dorsale 98 des griffes 96 se trouvant en contact avec l'alésage 86 pratiquement en son point de liaison avec la partie conique 85. Par déplacement vers l'avant de la bague 80, la partie dorsale 98 avantageusement arrondie des griffes 80 parcourt la région tronconique 85 jusqu'à venir se loger dans l'alésage 87, ce déplacement entraînant celui des griffes vers l'intérieur et de ce fait l'introduction des partie arrondies 99 dans la rainure 101 (partie inférieure de la figure 1a).

On a remarqué plus haut que la couronne fendue 90 était poussée en butée par une rondelle élastique 91 et pouvait de ce fait reculer. Cette mesure facultative a pour but de permettre des rattrapages de jeu et de ce fait de réaliser des pièces avec une précision plus faible. Au cas où le rattrapage de jeu s'opère, les extrémités 99 des griffes 96 permettent, de part leur profil arrondi de faire reculer légèrement vers l'arrière la couronne fendue 90.

On voit donc que le verrouillage et le déverrouillage de la fiche selon l'invention sur le raccord peut se faire simplement par coulissement de la bague 80, ce qui est beaucoup plus rapide que l'opération classique de vissage. La fiche selon l'invention présente donc le double avantage d'une facilité de montage (et de démontage) d'une part de la fibre dans l'embout et d'autre part, de la fiche dans le raccord.

La ferrule 40 présente un secteur cylindrique 43 bordé par le décrochement 42 se prolongeant par un secteur cylindrique 44 dont la section interne va diminuant par une section tronconique 45 se prolongeant par un alésage 46 et une section tronconique 47 s'évasant ensuite vers l'arrière. La section tronconique 47 débouche dans un alésage 49 recevant la partie arrière cylindrique 51 d'une bride élastique 50 (voir figures 5a à 5c). La bague fendue 50 présente à sa partie arrière un secteur tronconique 56 fendu par une fente 54, l'introduction de la fibre optique étant à ce niveau facilité par un chanfrein 55. La bague fendue 50 présente à sa partie centrale, et orientée longitudinalement, une ouverture cylindrique 53 se prolongeant vers l'avant par un alésage 52 de diamètre plus faible. A sa partie médiane, la bague fendue 50 présente une section rétrécie 58 se prolongeant vers le haut et vers le bas par deux ailettes 57.

Un bouchon 60 vient se visser sur un filetage 48 extérieur de la partie arrière de la ferrule 40 et présente une partie tronconique 64 venant porter sur la partie tronconique 56 de manière à venir refermer au moins partiellement la fente 54 et à immobiliser ainsi la fibre optique. La section tronconique 64 se prolonge vers l'arrière par un alésage 65 et par un chanfrein d'entrée 66 facilitant l'introduction de la fibre optique.

Le montage de la fibre optique dans la fiche selon l'invention se fait alors de la manière suivante. On introduit celle-ci par l'arrière de la fiche à travers successivement l'alésage 65, la fente 54, l'alésage 52, l'alésage 46, l'alésage 32, l'alésage 12. La bride 3 étant enlévée ou tirée vers l'avant, la fibre dépasse à l'avant d'une longueur nécessaire et suffisante pour en assurer le dénudage et le clivage. On recule alors la fibre jusqu'à ce que le dépassement de celle-ci par rapport à la face avant de l'embout 1 soit d'environ 2mm. On introduit ou on repousse alors le patin presseur 3 dans la rainure 5 prévue à cet effet jusqu'à ce que le patin arrive en butée. Le recul de la fibre pour la mettre d'aplomb avec la face avant de l'embout 1 se fait grâce à un calibre ou à l'autre fiche de connecteur situé en face dans le raccord.

On procède alors à l'immobilisation de la fibre en vissant à fond l'écrou 60.

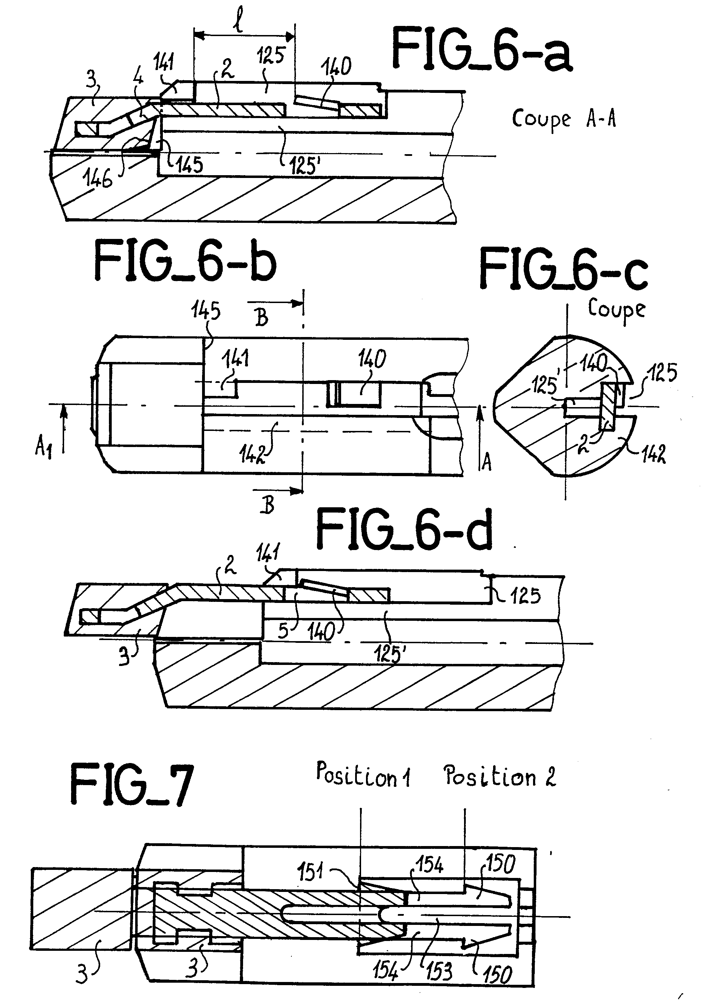

Un patin presseur déplaçable entre deux positions, selon une course l, et représenté aux figures 6a à 6d. La patte 2 porte à sa partie arrière une languette 140. En position repoussée, la face arrière 146 du patin 3 vient en butée contre une face de butée arrière 145, et dans l'autre position (figure 6d), la languette 140 vient en butée contre un rebord supérieur 141. La patte 2 coulisse dans la rainure 5, et la languette 140 dans une saignée 125. Lors de l'introduction de la patte 2, la languette 140, de par son élasticité, se replie et coulisse le long de la partie inférieure du rebord 141.

Selon la figure 7, la patte 2 porte deux ergots latéraux 150 portés par des bras d'extrémité 154 séparés par une fente 153, de telle sorte que l'introduction de la patte soit possible par repliement des bras 154, tout en permettant l'effet de butée procuré par les ergots 150.

REVENDICATIONS

1. Embout de centrage pour fibre optique permettant le démontage de celle-ci caractérisé en ce qu'il comporte :

- un V (1') de centrage de l'embout (1) dans un corps de connecteur (100),

- une rainure longitudinale (116) en forme de V, ménagée à la partie supérieure de l'avant de l'embout (1), et centrée par rapport audit V (1'),

- une patte (4) portant un patin souple (3) et destinée à venir appliquer la fibre optique dans ladite rainure en forme de V (116),

- des moyens de détrompage (121) permettant le montage de l'embout (1) sur le corps de connecteur (100) selon une orientation donnée.

2. Embout selon la revendication 1, caractérisé en ce qu'il comporte une première collerette (6) destinée à former une butée pour l'embout lors du montage flottant de l'embout (1) dans le corps de fiche du connecteur (100), ainsi que d'appui à la poussée d'un ressort (7) de mise en butée de l'embout (1).

3. Embout selon une des revendications 1 ou 2, caractérisé en ce que la patte (4) est logée dans une rainure longitudinale (5), ménagée à la partie avant de l'embout (1).

4. Embout selon une des revendications précédentes, caractérisé en ce qu'il comporte un alésage longitudinal (112), recevant un tube (10, 14) dont le diamètre intérieur (12) est, sur une partie du moins de sa longueur, égal au jeu près au diamètre de la fibre optique, de manière à pré-aligner celle-ci avec ladite rainure longitudinale (116) en forme de V.

5. Embout selon une des revendications précédentes, caractérisé en ce qu'il comporte une saignée longitudinale (125) débouchant à la face avant de l'embout au niveau de la patte (4) pour permettre l'introduction de la fibre grâce à une position avancée qui permet l'introduction de la fibre et une position reculée qui permet la mise en position de la fibre.

6. Fiche caractérisée en ce qu'elle comporte un embout selon une des revendications précédentes et un corps de fiche recevant ledit embout (1) caractérisé en ce que le corps de fiche (20) comporte une deuxième collerette (24) servant à sa mise en butée sur un raccord (100) ainsi qu'une couronne fendue (90) comprenant des griffes (96, 97) venant s'insérer dans une rainure (101) du raccord (100) et venant s'appuyer sur ladite deuxième collerette (24) en vue de sa mise en butée, l'encliquetage des griffes (96, 97) dans la rainure (101) étant réalisé par déplacement longitudinal d'une bague (80) présentant à sa partie avant (84) un profil incurvé (85, 86) de telle manière que, lorsque le manchon (80) est déplacé en direction de l'extrémité (97) des griffes (96, 97), le profil incurvé vienne en contact avec une partie dorsale arrondie (98) de celles-ci de manière à les pousser progressivement en fond de la rainure (101) du raccord (100).

7. Fiche selon la revendication 6, caractérisée en ce que l'embout (1) est du type flottant et en ce qu'elle comporte une rondelle élastique (91) venant pousser la couronne (90) en direction de la deuxième collerette (24) et en ce que l'extrémité (99) des griffes (96, 97) tournée vers la rainure (101) du raccord (100) est arrondie de telle sorte qu'un rattrapage de jeu soit possible par le fait que ladite extrémité arrondie (99) des griffes (96, 97) provoque un recul éventuel de la couronne (90) d'une quantité correspondant au jeu à rattraper.

8. Fiche selon une des revendications 6 ou 7, caractérisée en ce que, à la partie arrière de la fiche (20), la fibre optique est bridée par une bague fendue (50) présentant un profil tronconique (56) coopérant en vue du serrage avec un tronc de cône correspondant (64) d'un écrou de serrage (60).

9. Fiche selon une des revendications 6 à 8, caractérisée en ce que le déplacement vers l'arrière de la couronne (90) et du manchon (80) est limité par la partie avant (76) d'un bouchon (70) vissé à l'arrière du corps de fiche (20), ladite partie avant (76) servant également d'appui à ladite rondelle élastique (91).

FIG_1-a

FIG_1-b

1/5

0153249

0153249

**FIG_2-a**

**FIG_2-b**

0153249

# FIG_3-a

20

25

26    29    21

26

21    21

21

24

121

1

5

112    116

FIG_2-c

1'

121

121

1'

8

22

24

# FIG_3-b

22'

21

23    21    21

# FIG_4-a

# FIG_4-b

# FIG_5-a

# FIG_5-b

# FIG_5-c

FIG_6-a

Coupe A-A

FIG_6-b

FIG_6-c

Coupe

FIG_6-d

FIG_7

Position 1    Position 2